# EUROPÄISCHE PATENTANMELDUNG

(11) **EP 3 300 830 A1**
(43) Veröffentlichungstag der Anmeldung: **04.04.2018**
(21) Anmeldenummer: 17189582.4
(22) Anmeldetag: 06.09.2017
(51) Int. Cl.: B23K 26/14, B23K 26/21, B23K 26/142

(54) **LASER-MATERIALBEARBEITUNGS-VORRICHTUNG UND LASER-MATERIALBEARBEITUNGS-VERFAHREN ZUM BEARBEITEN METALLISCHER WERKSTÜCKE**

(30) Priorität: 06.09.2016 DE 102016116659
(71) Anmelder: LASER on demand GmbH, 31303 Burgdorf (DE)
(72) Erfinder: Meier, Oliver, 30938 Burgwedel (DE)
(74) Vertreter: Bremer, Ulrich

(57) **Zusammenfassung**

Die Erfindung betrifft eine Laser-Materialbearbeitungs -Vorrichtung (1) zur Laser-Materialbearbeitung, insbesondere Laserschweißen von metallischen Werkstücken (5, 6), wobei die Laser-Materialbearbeitungs-Vorrichtung (1) aufweist:
einen Laser (2) zum Aussenden eines Laserstrahls (3) entlang einer optischen Achse (A),
eine Laser-Optik (4) zum Bündeln des Laserstrahls (3) entlang der optischen Achse (A).
Hierbei ist eine Metalldampf-Führungseinrichtung (14) mit einem Metalldampf-Führungskanal (16) vorgesehen, der den gebündelten Laserstrahl (3a) umgibt und sich entlang der optischen Achse (A) erstreckt,
wobei der Metalldampf-Führungskanal (16) sich entgegen der Laserstrahl-Richtung und/oder von dem Brennpunkt (B) zum Laser (2) hin verbreitert, insbesondere konisch aufweitend.

## Beschreibung

Die Erfindung betrifft eine Laser-Materialbearbeitungs-Vorrichtung und ein Laser-Materialbearbeitungs-Verfahren zum Bearbeiten metallischer Werkstücke.

Bei der Laser-Materialbearbeitung metallischer Werkstücke wird ein Laserstrahl, der z. B. von einem Festkörper-Laser oder CO2-Laser erzeugt wird, durch eine Laseroptik gebündelt und entlang einer optischen Achse auf das Werkstück bzw. die zu bearbeitenden Werkstücke geleitet. Hierbei kann der Brennpunkt bzw. Brennfleck unterhalb, auf oder oberhalb der Werkstück-oberfläche angeordnet werden; in Abhängigkeit der Laserstrahlintensität im Auftreffpunkt auf der Werkstückoberfläche, dessen zeitlichen Verlaufs, der Vorschubgeschwindigkeit zur Relativbewegung zwischen Strahl und Bauteil und des Einsatzes von Prozessgasen werden unterschiedliche Verfahren zur Laser-Materialbearbeitung wie Abtragen, Schneiden oder Schweißen realisiert.

Beim Laserschweißen werden zwei metallische Werkstücke, im Allgemeinen Metallbleche, in einer Laserschweißnaht gefügt. Insbesondere ab einer werkstoffabhängigen Intensität in der Größenordnung 10^6 W/cm2 setzt das sog. Tiefschweißen ein, indem der Laserstrahl das Material verdampft, so dass sich im Material eine Dampfkapillare, das sogenannte Keyhole, bildet, die von Schmelze umgeben ist. An der Oberseite des Blechs entsteht entsprechend eine Metalldampf-Wolke, die aus der Dampfkapillare austritt.

Laserschweiß-Verfahren werden im Allgemeinen in einem Schutzgas bzw. Prozessgas, z. B. Argon oder Stickstoff, ausgebildet, um ungewollte chemische Reaktionen zu verhindern. Es zeigt sich, dass sich durch den Metalldampf Wirbel bilden; daher ist das Erzeugen einer guten Schutzgas-Abdeckung in der Prozesszone wichtig, um sichere Prozessbedingungen zu ermöglichen.

Die DE 100 17 845 C1 betrifft eine Schweißdüsenanordnung und ein Schweißverfahren, bei dem eine einen Laserstrahl umhüllende Düse mit einer Düsenkammer und einer Gaszuführung zum Zuführen des Schutzgases vorgesehen sind.

Die GB 2 443 513 A zeigt eine Laser-Bearbeitungseinrichtung mit einer durch ein Fenster verschlossenen Kammer.

Die DE 10 2010 005 043 A1 zeigt eine Schweißeinrichtung mit einer Abschirmeinrichtung, die eine Schweißstelle zumindest bereichsweise umgibt und abschirmt, hierbei ist eine Absaugvorrichtung vorgesehen, die mit der Abschirmeinrichtung kommuniziert und verbunden ist und Material aktiv zur Seite hin absaugt.

Die DE 10 2014 203 576 A1 beschreibt einen Laserbearbeitungskopf mit werkstücknaher Cross-Jet-Düse. Hierbei wird der Laserstrahl durch eine Fokussieroptik auf eine Bearbeitungszone fokussiert, wobei mit einer Cross-Jet-Düse eine Querströmung quer, insbesondere rechtwinklig zur Strahlachse ausgebildet wird.

Die EP 1 584 406 A2 beschreibt eine Schutzgasführung durch mehrere koaxiale Düsen. Die DE 39 18 363 A1 beschreibt einen Optikschutz durch Wirbelbildung.

Die WO 2005/099959 A1 und EP 0 732 169 A1 beschreiben weitere Ausbildungen von Laserschweiß-Vorrichtungen.

Es zeigt sich dennoch, dass insbesondere der Metalldampfstrom zu deutlichen Verwirbelungen führt, die eine sichere Prozessgasabdeckung beeinträchtigen und im Allgemeinen einen hohen Verbrauch von Schutzgas erfordern. Dies ist für nahezu alle Verfahren der Laser-Materialbearbeitung von Bedeutung.

Der Erfindung liegt die Aufgabe zugrunde, eine Laser- Materialbearbeitungs-Vorrichtung und ein Laser-Materialbearbeitungs-Verfahren zu schaffen, die eine sichere Prozessführung und einen geringen Verbrauch von Schutzgas (Prozessgas) ermöglichen.

Diese Aufgabe wird durch eine Laser-Materialbearbeitungs-Vorrichtung und ein Laser-Materialbearbeitungs-Verfahren nach den unabhängigen Ansprüchen gelöst. Das Laser-Materialbearbeitungs-Verfahren ist insbesondere zur Verwendung oder Anwendung der Laser-Materialbearbeitungs-Vorrichtung vorgesehen; die Laser-Materialbearbeitungs-Vorrichtung kann insbesondere zur Durchführung des Laser-Materialbearbeitungs-Verfahrens dienen. Die Unteransprüche beschreiben bevorzugte Weiterbildungen.

Die Laser-Materialbearbeitungs-Vorrichtung und das Laser-Materialbearbeitungs-Verfahren kann vorzugsweise für das Laserstrahlschweißen eingesetzt werden, wie insbesondere nachfolgend beschrieben wird. Somit ist eine Metalldampf-Führungseinrichtung vorgesehen, die einen Metalldampf-Führungskanal aufweist, der die optische Achse bzw. den gebündelten Laserstrahl umschließt und weiterhin den aus der Dampfkapillare austretenden Metalldampf aufnimmt und einschließt. Somit kann der Metalldampf entlang der optischen Achse abgeführt werden. Zum Werkstück bzw. der Prozesszone mit dem Brennpunkt hin weist die Metalldampf- Führungseinrichtung vorteilhafterweise einen Spalt auf, der die Zuführung von Prozessgas bzw. Schutzgas ermöglicht. Somit kann Schutzgas zum Brennpunkt zugeführt werden, insbesondere konzentrisch zur optischen Achse hin, und von dem aus der Dampfkapillare austretenden Metalldampf-Strom mitgerissen werden.

Es zeigt sich, dass bereits durch den Metalldampf-Führungskanal ein gezieltes Abführen des Metalldampfes ermöglicht wird, das eine gezielte Zuführung des Schutzgases zu dem Prozessbereich, d. h. dem aufgeschmolzenen Bereich mit der Dampfkapillare ermöglicht.

Hierdurch bildet sich eine definierte Strömung; Verwirbelungen werden entsprechend vermieden.

Der Metalldampf-Führungskanal weitet sich insbesondere entlang der optischen Achse entgegen der Strahlrichtung, d. h. von dem Brennpunkt weg zu dem Laser hin auf. Durch diese Verbreiterung des Querschnitts des Metalldampf-Führungskanals wird somit eine Düse ausgebildet, die nach dem Prinzip einer Venturi-Düse im Bereich des Spaltes und somit der Dampfkapillare eine Sogwirkung ausbildet. Somit wird das Schutzgas ohne zusätzliche aktive Absaug-Einrichtungen bereits von dem Metalldampf-Strom gezielt mitgerissen, so dass sich eine gezielte Schutzgas-Führung ergibt, bei dennoch geringem Verbrauch.

Vorzugsweise ist hierbei ein unterer Kanal-Querschnitt des Metalldampf-Führungskanals größer als ein Spaltquerschnitt des Spaltes zwischen der unteren Endfläche und der Werkstück-Oberfläche; hierdurch wird der Effekt der Venturi-Düse verstärkt.

Selbst bei Laser-Materialbearbeitungsverfahren ohne ausgeprägte Dampfkapillare kann der Werkstoff oberflächlich verdampfen oder das erwärmte, die Prozesszone umgebende Gasmedium aufsteigen und die gewünschte Gasführung erreichen.

Der Metalldampf-Führungskanal kann sich insbesondere konisch von dem Brennpunkt weg aufweiten, insbesondere geradlinig konisch. Hierbei ist die konische Innenfläche größer als das Strahlen-Bündel des Laser-Strahls ausgebildet, so dass ein konischer Ringspalt zwischen dem Strahlen-Bündel und der konischen Innenfläche verbleibt. Somit wird der Einfluss des Metalldampfes auf das Strahlenbündel verringert und eine größere Ausbildung des Düsen-Effektes ermöglicht.

Ein Abstand der Metalldampf-Führungseinrichtung zu der Werkstück-Oberfläche ist vorteilhafterweise derartig gering, dass der aus der Dampfkapillare austretende Metalldampfdruck direkt von dem Metalldampf- Führungskanal erfasst wird.

Die Metalldampf-Führungseinrichtung kann insbesondere unten, d.h. vorzugsweise an einer unteren Endfläche, und/oder oben offen sein. Indem sie eine untere Endfläche aufweist, die gegenüber dem Brennpunkt oder einer Werkstück-Oberfläche einen Spalt (Abstand entlang der optischen Achse) aufweist, kann über den Spalt eine gleichmäßige, vorzugsweise konzentrische Zuführung des Schutzgases zum Brennpunkt und somit zu der Düsen-Ausbildung des Führungskanals erfolgen, so dass ein effektiver Düsen-Effekt erreicht werden kann.

Die untere Endfläche der Metalldampf-Führungseinrichtung ist zur Ausbildung eines gleichmäßigen Spaltes insbesondere Kontur-parallel zur Werkstückoberfläche ausgebildet. Für Sicken- oder Kehlnahtausbildungen kann z. B. ein Absatz ausgebildet sein kann, d.h. eine nicht-ebene Ausbildung ist möglich. Das Schutzgas kann über eine Schutzgas-Zuführeinrichtung direkt in den Spalt zugeführt werden.

Alternativ oder ergänzend zu einer parallelen Ausbildung mittels eines Spaltes kann ein Schutzgas-Kanal ausgebildet sein, der eine gleichmäßige Zuführung des Schutzgases ermöglicht. Dieser Schutzgas-Kanal kann insbesondere als Ringkanal oder Ringnut, insbesondere nach unten zum Werkstück hin offene Ringnut ausgebildet sein. Somit kann das Schutzgas z. B. mit leichtem Überdruck gezielt zugeführt werden. Der Strömungswiderstand zum Abströmen nach innen hin ist hierbei konstruktionsbedingt kleiner als nach außen über den Spalt, so dass das Schutzgas im Wesentlichen nach innen zu dem Brennpunkt und zu dem Metalldampfführungs-Kanal geführt wird, wo es durch den Düsen-Effekt von dem Metalldampf-Strom mitgeführt wird.

Der Spalt, der zwischen der unteren Fläche der Metalldampf-Führungseinrichtung und dem Werkstück gebildet wird, weist in der Ausführungsform, in der Schutzgas in die Ringnut zugeführt wird, vorzugsweise die Funktion einer Spaltdichtung auf. Sie erhöht also den Strömungswiderstand des Schutzgases im Spalt und verringert somit den Volumenstrom durch den Spalt. Der Schutzgasvolumenstrom, der nach außen entweicht und somit für den Prozess verloren geht, wird vorzugsweise minimiert. Die Verjüngung des Strömungsquerschnitts von der Ringnut zum Brennpunkt führt zu einer laminarisierten, horizontalen Gasströmung zum Brennpunkt und stabilisiert die Metalldampfströmung.

Der Spalt, der zwischen der unteren Fläche der Metalldampf-Führungseinrichtung und dem Werkstück erzeugt wird, weist in der Ausführungsform ohne Ringnut vorzugsweise die Funktion auf, dass durch seine Geometrie der Volumenstrom des Schutzgases eingestellt wird und eine laminare und horizontale Gasströmung zum Brennpunkt ausbildbar ist.

Bei beiden zuletzt genannten Ausführungsformen ist die Spaltbreite, d.h. der Abstand zwischen der unteren Fläche der Metalldampf-Führungseinrichtung und dem Werkstück, vorzugsweise kleiner als die Spaltlänge zwischen den spaltbildenden Partnern.

Somit kann die Schutzgas-Zuführeinrichtung direkt an einen Zuführkanal zu der Ringnut angeschlossen sein.

Bei den Ausführungsformen mit aktiver Zuführung des Schutzgases in die Metalldampf-Führungseinrichtung, d. h. insbesondere über eine Schutzgas-Zuführung in einen Schutzgas-Kanal oder Schutzgas-Ringnut, kann im Inneren der ausgebildeten Düse bzw. des Metalldampf-Führungskanals eine aktive Strömung von unten nach oben ausgebildet werden, die die Prozessemissionen von der konischen Innenfläche fernhalten kann, um Ablagerungen zu vermeiden.

Indem die Metalldampf-Führungseinrichtung mit ihrem Metalldampf-Führungskanal oben offen ist, wird ein direktes Austreten des Metalldampf-Stroms nach oben entlang der optischen Achse ermöglicht, ohne den Metalldampfstrom wie bei einigen Systemen des Standes der Technik aufwändig umzuleiten.

Oberhalb der Metalldampf-Führungseinrichtung kann hierbei ein Druckluftstrom quer zur optischen Achse, insbesondere ein sogenannter Cross-Jet, ausgebildet sein, der somit die Abführung des Metalldampf-Stroms nach oben aus dem Führungskanal unterstützt. Hierbei kann der Cross-Jet von einer separaten Zuführung, oder auch von einer als Teil der Materialbearbeitungs- Vorrichtung vorgesehenen Cross-Jet-Zuführeinrichtung zugeführt werden. Die Cross-Jet-Zuführeinrichtung kann oben auf der Metalldampf-Führungseinrichtung angebracht werden und den Metalldampf-Führungskanal direkt über eine Öffnung aufnehmen, so dass eine effektive Abführung und - durch Einstellung geeigneter Drücke - eine gezielte Sogwirkung auf den Gesamtstrom in dem Metalldampf-Führungskanal einstellbar ist.

Somit kann durch geringen Aufwand eine sichere Prozessführung erreicht werden und der Verbrauch an Schutzgas verringert werden.

Die Metalldampf-Führungseinrichtung kann somit im Wesentlichen als Düse und z. B. rotationssymmetrisch, oder auch mit einer Vorzugsrichtung entsprechend der Verfahr-Richtung ausgebildet sein. Sie kann z. B. vollständig aus Metall, z. B. Kupfer und somit mit hohem Wärmeleitvermögen ausgebildet sein. Eine aktive Kühlung ist im Allgemeinen nicht erforderlich, aber möglich.

Eine derartige Metalldampf-Führungseinrichtung, insbesondere mit sich konisch nach oben verbreitendem Metalldampf-Führungskanal und oben offenem Ende, führt so auch zu keinem relevanten Niederschlag an den Wänden und keinem hohem Strömungswiderstand gegenüber dem Metalldampf-Strom; vielmehr wird eine Sogwirkung auf das Schutzgas ausgebildet, die den Metalldampfstrom in dem Transport nach oben unterstützt. Dies kann insbesondere durch die zusätzliche Druckluftführung (Cross-Jet) oberhalb der Metalldampf-Führungseinrichtung unterstützt werden.

Ein weiterer Vorteil liegt in der Abschirmung von Reflexionen des Lasers durch die Metalldampf-Führungseinrichtung zum Außenraum hin, wodurch eine hohe Arbeitssicherheit erreicht wird.

Gemäß einer weiteren Ausbildung kann ein Führungsstrom über eine Führungsstrom-Zuführeinrichtung in den Metalldampf-Führungskanal zugeführt werden, z. B. über einen Führungsstrom-Einlass direkt vertikal aufwärts gerichtet. Anders als das Schutzgas wird ein derartiger Führungsstrom somit nicht zu dem Spalt und somit auch der Werkstück-Oberfläche zugeführt, sondern oberhalb davon und bereits in dem Metalldampf-Führungskanal. Somit kann als Führungsstrom ein günstigeres Gas als das Schutzgas (Prozessgas), z. B. Druckluft eingesetzt werden; der Führungsstrom unterstützt die Strömung und kann insbesondere auch heiße Metallpartikel von der Innenwand des Metalldampf-Führungskanals abhalten, d.h. einen Luftvorhang als Schutz der Innenwand ausbilden.

Während somit von der Schutzgas-Zuführung über z. B. einen Ringkanal zugeführtes Schutzgas über den Spalt auch - im Allgemeinen im geringeren Umfang - nach außen gelangen kann, gelangt der Führungsstrom nicht zu dem Werkstück und den Spalt nach außen.

Die Metalldampf- Führungseinrichtung kann ein- oder mehrstückig aus Metall, z. B. Kupfer, oder Keramik ausgebildet sein.

In die Bearbeitungszone um die Dampfkapillare und/oder den Brennpunkt kann ein Zusatzwerkstoff in Form von Draht oder Pulver zugeführt werden.

Die Erfindung wird im Folgenden anhand der beiliegenden Zeichnungen an einigen Ausführungsformen näher erläutert. Es zeigen:
- Fig. 1: eine Laser-Materialbearbeitungs-Vorrichtung gemäß einer Ausführungsform bei der Laser-Materialbearbeitung von Werkstücken in Seitenansicht;
- Fig. 2: den Schnitt I-I aus Fig. 1, mit einer Detailvergrößerung der Dampfkapillare;
- Fig. 3: eine Laser-Materialbearbeitungs-Vorrichtung gemäß einer weiteren Ausführungsform bei der Laser-Materialbearbeitung von Werkstücken;
- Fig. 4: den Schnitt II-II aus Fig. 3, mit einer Detailvergrößerung;
- Fig. 5: eine Laser-Materialbearbeitungs-Vorrichtung gemäß einer weiteren Ausführungsform mit zusätzlicher aktiver Führungstrom-Ausbildung;
- Fig. 6: den Schnitt III - III aus Fig. 5;
- Fig. 7: die Einzeilheit D aus Fig. 6;
- Fig. 8: eine weitere Ausführungsform mit Cross-Jet-Zuführeinrichtung im Schnitt.

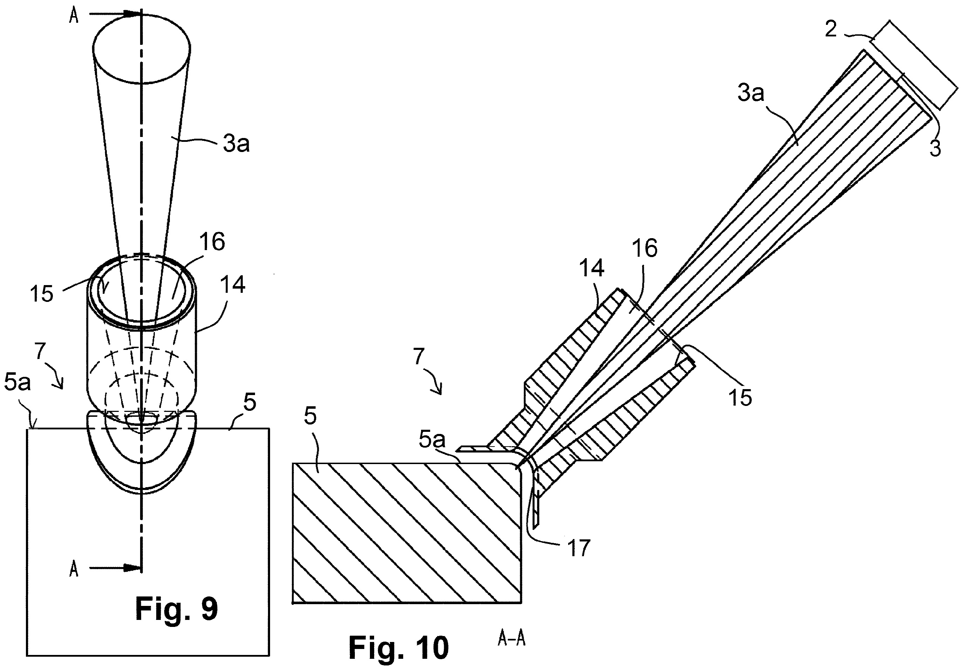

- Fig. 9: eine Bearbeitung eines Werkstücks mit nicht planer Oberfläche in Seitenansicht;
- Fig. 10: den Schnitt A-A aus Fig. 9.

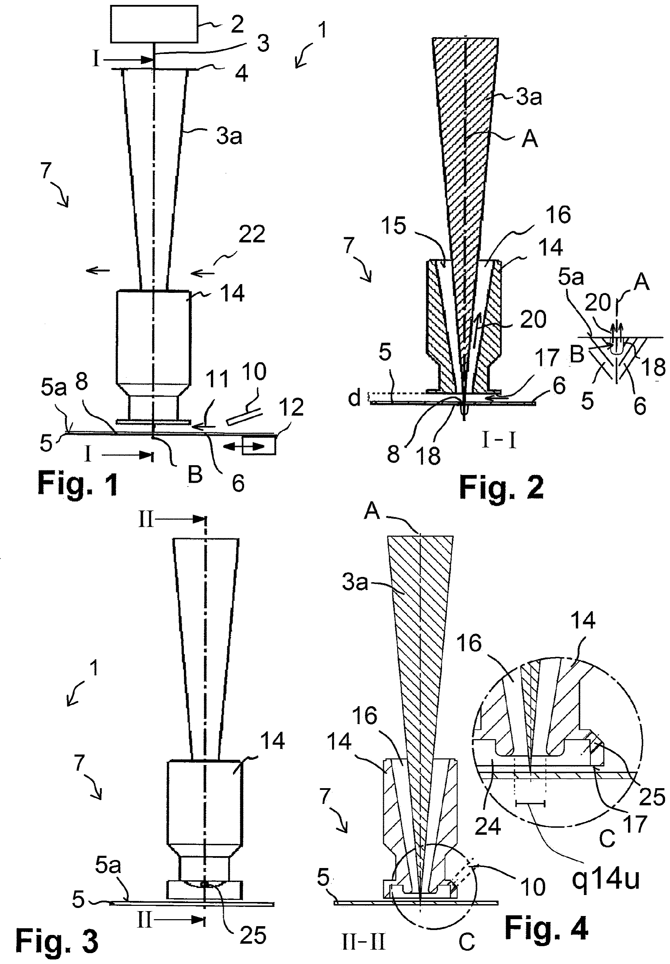

Eine Laser-Materialbearbeitungs-Vorrichtung 1 ist in Fig. 1 mit einigen relevanten Komponenten gezeigt; die Laser-Materialbearbeitungs-Vorrichtung 1 weist einen Laser (Laserkopf) 2 zum Aussenden eines Laserstrahls 3 entlang einer optischen Achse A auf, weiterhin eine Laseroptik 4, z. B. mit einer Bikonvex-Linse, zum Fokussieren des Laserstrahls 3 auf einen Brennpunkt B, sodass ein sich konisch verjüngendes Strahlenbündel 3a entlang der optischen Achse A ausgebildet wird. Hierdurch kann ein Brennbereich um den Brennpunkt B herum ausgebildet werden, zur Laser-Materialbearbeitung, hier zum Laserschweißen von Werkstücken 5, 6 entlang einer Laser-Materialbearbeitungs-Spur, hier somit einer Laserschweißnaht 8. Eine Schutzgas-Zuführeinrichtung 10 ist zum Zuführen eines Schutzgases 11, z. B. Argon Ar oder Stickstoff N, vorgesehen. Weiterhin ist eine Vorschub-Einrichtung 12 zum relativen Vorschub der Werkstücke 5, 6 zu der Laser-Materialbearbeitungs-Vorrichtung 1 vorgesehen; hierbei können die Werkstücke 5, 6 gegenüber der Laser-Materialbearbeitungs-Vorrichtung 1 verstellt werden, oder umgekehrt.

Um die optische Achse A herum ist eine Metalldampf- Führungseinrichtung 14 vorgesehen, die in fester relativer Position mit den weiteren Komponenten der Laser-Materialbearbeitungs-Vorrichtung 1, insbesondere der Laseroptik 4, vorgesehen ist und mit einem Spalt d als festem relativen Abstand (relativer Position) gegenüber den Werkstücken 5, 6 positioniert wird. Die Metalldampf- Führungseinrichtung 14 weist einen Metalldampf- Führungskanal 16 auf, der durch eine sich konisch entlang der optischen Achse A zum Brennpunkt B hin verjüngende Innenwand 15 gebildet ist. Weiterhin weist die Metalldampf- Führungseinrichtung 14 eine untere Endfläche 17 auf, die insbesondere plan bzw. eben ausgebildet sein kann, um Kontur-parallel zu den Werkstücken 5, 6 den Spalt d als festen Abstand auszubilden. Die konische Innenwand 15 kann gemäß der Ausführungsform der Fig. 2 geradlinig konisch ausgebildet sein; sie kann jedoch auch z. B. mit einem gekrümmten Verlauf ausgebildet sein.

Die konische Innenwand 15 ist mit einem derartig großen Öffnungswinkel, insbesondere einem größeren Öffnungswinkel als das Strahl-Bündel 3a ausgebildet, so dass zwischen dem Strahl-Bündel 3a und der konischen Innenfläche 15 ein konischer Ringspalt 16a verbleibt, der somit nicht vom Strahl-Bündel 3a erfasst ist.

Während des Betriebs der Laser-Materialbearbeitungs-Vorrichtung 1, d. h. bei der Durchführung des Laser-Materialbearbeitungs-Verfahrens, wird somit ein Laserstrahl 3 von dem Laserkopf 2 ausgestrahlt, durch die Laseroptik 4 gebündelt und entlang der optischen Achse A auf den Brennpunkt B geführt, der in den Werkstücken 5, 6 bzw. zur Ausbildung der Laser-Materialbearbeitungs-Spur 8 auf die Werkstücke 5, 6 gerichtet ist. Vorzugsweise wird in der Schmelze eine Dampfkapillare 18, das sog. Keyhole, ausgebildet, die im Wesentlichen lotrecht entlang der optischen Achse A verläuft. Der Brennpunkt B ist vorzugsweise in dem Fügestoß der Werkstücke 5, 6, d. h. unterhalb der Oberfläche, ausgebildet, d. h. in der Dampfkapillare 18. Durch das Strahl-Bündel 3a verdampftes Material tritt somit aus der Dampfkapillare 18 nach oben aus und wird in dem Metalldampf-Führungskanal 16 aufgenommen, so dass es einen Metalldampf-Strom 20 aus verdampften Metallpartikeln bildet, der aufgrund der Führung innerhalb der Dampfkapillare 18 zunächst im Wesentlichen entlang der optischen Achse (Verlaufsrichtung der Dampfkapillare 18) aus dem Werkstück 5 bzw. den Werkstücken 5, 6 austritt. Bei dem in Fig. 1, 2 gezeigten lotrechten Auftreffen der optischen Achse A auf die Werkstücke 5, 6 verläuft der Metalldampf- Strom 20 somit lotrecht nach oben; bei nicht-lotrechtem Auftreffen der optischen Achse A wird entsprechend auch die Dampfkapillare 18 unter dem Auftreffwinkel der optischen Achse A ausgebildet, so dass auch der Metalldampf-Strom 20 in erster Näherung unter diesem Auftreff-Winkel aus der Oberfläche heraus tritt.

Somit ergibt sich ein Metalldampf-Strom 20, der nach dem Austritt aus der Dampfkapillare 18 entsprechend divergiert. Der divergierende Metalldampf-Strom 20 wird in dem sich konisch verbreiternden Metalldampf- Führungskanal 16 direkt, ohne Umlenkung oder Abbremsung, nach oben weg geführt.

Der sich aufweitende Metalldampf-Führungskanal 16 mit dem in ihm geführten Metalldampf-Strom 20 wirkt hierbei wie eine Düse, insbesondere eine Venturi-Düse, so dass in dem Spalt d auf das Schutzgas 11 eine Sogwirkung ausgeübt wird, d. h. Schutzgas 11 wird mit dem Metalldampf-Strom 20 teilweise mitgerissen. Somit wird eine definierte Strömung ausgebildet, die ohne Verwirbelungen zu einem gleichmäßigen Nachströmen des Schutzgases 11 zur optischen Achse A hin und von dort in dem Metalldampf-Führungskanal 16 nach oben weg erfolgt.

Vorzugsweise ist hierbei ein unterer Kanal-Querschnitt q14u des Metalldampf-Führungskanals 16 größer als ein zylinderförmiger Spaltquerschnitt qd des Spaltes d. So kann z.B. ein Kanaldurchmesser von 10mm und somit ein Kanal-Querschnitt q14u = pi*(5mm)²=78,5 mm² bei einem Spalt von d= 2 mm, d.h. einem Spaltquerschnitt von qd= 62,8 mm² vorgesehen sein.

Oberhalb der Metalldampf-Führungseinrichtung 14 ist ein Druckluft-strom als Cross-Jet 22 ausgebildet, der den Metalldampf-Strom 20 senkrecht zur Achse A, d.h. zur Seite hin ableitet. Der Cross-Jet 22 kann insbesondere eine Sog-Wirkung auf den Metalldampf-Führungskanal 16 ausüben und somit den Metalldampf-Strom 20 in dem Metalldampf-Führungskanal 16 stabilisieren.

Die Metalldampf-Führungseinrichtung 14 kann gemäß der Ausführungsform der Fig. 1, 2 vorzugsweise ein- oder mehrteilig aus Metall, z. B. Kupfer, oder keramischen Werkstoffen ausgebildet sein. Die Metalldampf-Führungseinrichtung 14 kann insbesondere als Drehteil ausgebildet sein, ggf. mit weiteren Kanälen. Sie kann zum einen durch den Cross-Jet 22 an ihrer Oberseite und ergänzend durch das Schutzgas 11 gekühlt sein und somit ohne zusätzliche Kühleinrichtungen ausgebildet sein. Es können aber auch aktive Kühleinrichtungen, z. B. ein Kühlwasser-Kanal, in der Metalldampf-Führungseinrichtung 14 ausgebildet sein.

Bei der Ausführungsform der Fig. 3 und 4 ist in der Metalldampf-Führungseinrichtung 14 - bei sonst entsprechendem Aufbau wie der Ausführungsform der Fig. 1 und 2 - ein Schutzgas-Kanal 24 ausgebildet, hier als Ringnut, die an der unteren Endfläche 17 ausgebildet ist, wobei eine Schutzgas-Zuführung 25 von der Außenseite her vorgesehen ist. Somit kann das Schutzgas 11 ausschließlich durch diese Schutzgas-Zuführung 25 in die Ringnut 24 zugeführt werden, oder auch ergänzend, wie in der ersten Ausführungsform von außen in den Spalt d. Die Schutzgas-Zuführung kühlt somit zum einen die Metalldampf-Führungseinrichtung 14, und dient weiterhin der direkten Zuführung des Schutzgases 11 zur Dampfkapillare 18, wodurch die Schutzgas-Abdeckung sichergestellt wird. Hierbei kann sich das Schutzgas 11 zunächst in der Ringnut 24 verteilen und von dort aus in radialer Richtung zur optischen Achse A hin gleichmäßig strömen, wo es von dem Metalldampf-Strom 20 der Metallpartikel mitgerissen wird. Es ergibt sich aufgrund des geringeren Strömungswiderstandes nach innen hin nur eine geringe Abströmung von Schutzgas 11 nach außen durch den Spalt d.

Somit kann der durch die Laser-Materialbearbeitungs erzeugte Metalldampf-Strom 20, d. h. Metalldampf bzw. teilionisierter Metalldampf, gezielt und ohne relevante Beeinträchtigungen durch Verwirbelungen, in dem Metalldampf-Führungskanal 16 entlang der optischen Achse weggeführt werden, so dass auch eine gleichmäßige Abdeckung mit Schutzgas erreicht wird.

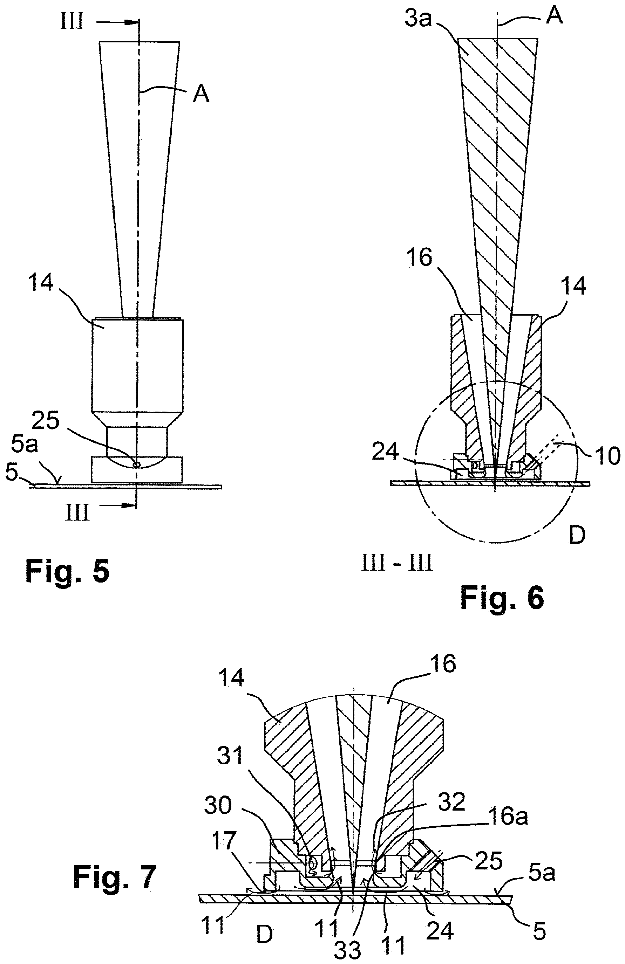

Fig. 5 bis 7 zeigen eine Ausführungsform, bei der zusätzlich zu der dem Schutzgas-Kanal 24 und der Schutzgas-Zuführung 25 der vorherigen Ausführungsform der Fig. 3, 4 ergänzend eine Führungsstrom-Zuführeinrichtung 30 mit einem Führungsstrom-Anschluss 31 zum Aufnehmen des Führungsstroms von einer äußeren Leitung und einem Führungsstrom-Einlass 33 zum Zuführen eines Führungsstroms 32 vorgesehen. Der Führungsstrom-Einlass 33 ist insbesondere als ringförmiger Spalt 33 ausgebildet, der oberhalb des Prozessbereichs, d.h. oberhalb der Werkstück-Oberfläche 5a und somit insbesondere auch oberhalb der Schutzgas-Zuführung 25 vorgesehen ist. Hierbei ist der Führungsstrom-Einlass 33 vorzugsweise nach oben ausgerichtet, um den Führungsstrom 32 nach oben - entgegen der Laserstrahl-Richtung und somit weg vom Werkstück 5, 6 zu leiten.

Der Führungsstrom 32 wird über den ringförmigen Spalt 33 an der konischen Innenwand 15 in den Führungskanal 16 eingegeben, und zwar am unteren Endbereich 16a des Führungskanals 16, so dass der Führungsstrom 32 in dem Führungskanal 16 lateral außen nach oben fließt und den Metalldampf-Strom 20 sowie das mitgerissene Schutzgas 11 verstärkt, wodurch insbesondere die Ablagerung von Metallpartikeln an der konischen Innenwand 15 vermieden wird. Der Führungsstrom 32 bildet somit einen äußeren "Gas-Vorhang" und kann insbesondere ein kostengünstiges Gas, z. B. Pressluft sein, da er nicht in den Bereich den heißen Prozessbereich bzw. die Metallschmelze und die Dampfkapillare 18 gelangt. Hierzu ist die Führungsstrom-Zuführeinrichtung 30 vorzugsweise als zusätzliches Bauteil angesetzt, so dass zwischen ihr und dem oberen Bauteil der umlaufende ringförmige Spalt 33 zur Zuführung des Führungsstroms 32 gebildet wird.

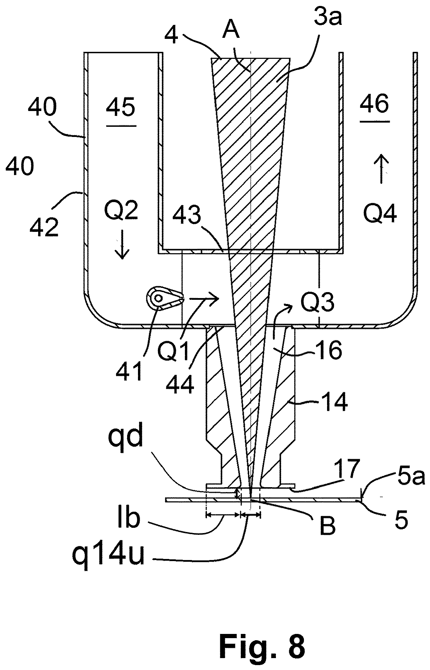

Die Ausführungsform der Fig. 8 zeigt eine Laser- Materialbearbeitungs-Vorrichtung mit einer Cross-Jet-Zuführeinrichtung 40, die oberhalb der Metalldampf-Führungseinrichtung und somit auch oberhalb des Metalldampf-Führungskanals 16 vorgesehen ist und eine Druckluft-Düse 41 (oder allgemein Druckluft-Zuführeinlass) für einen Druckluft-Strahl Q1, der den eigentlichen Cross-Jet 22 bildet, sowie eine Cross-Jet-Kammer 42 als umgebendes Gehäuse aufweist. Die Cross-Jet- Kammer 42 wird vorzugsweise direkt auf die Metalldampf- Führungseinrichtung 14 gesetzt, vorzugsweise abgedichtet, so dass eine untere Öffnung 44 der Cross-Jet- Kammer 42 an den Metalldampf-Führungskanal 16 angeschlossen ist und diesen somit nach oben aufnimmt. An der Oberseite der Cross-Jet-Kammer 42 ist im Bereich der optischen Achse A hier ein Schutzglas 43 als optisches Fenster für den Laserstrahl 3 bzw. das Laserstrahl-Bündel 3a vorgesehen.

Die Cross-Jet-Zuführeinrichtung 40 ermöglicht somit eine gezielte Führung des Cross-Jets 22, wodurch auch eine bessere Sogwirkung entsteht. Hierbei kann die Cross-Jet-Kammer 42 insbesondere einen Zuführkanal 45 aufweisen, über den Zuluft ergänzend - per Sogwirkung - aufgenommen werden kann und eine ungünstige Wirbelbildung in der Nähe der Metalldampf-Führungseinrichtung 14 vermieden werden kann, und insbesondere einen Absaugkanal 46 zum Abführen, z. B. mit zusätzlicher aktiver Absaugung.

Somit tritt in Fig. 8 aus dem Metalldampf-Führungskanal 16, bzw. der Düse, ein Gesamtstrom Q3, der sich aus dem Metalldampf-Strom 20 und dem mitgenommenen Schutzgas 11, bzw. bei den Ausführungsform der Fig. 5 bis 7 ergänzend dem Führungsstrom 32 bildet, wobei der Cross-Jet 22 als Luftstrom Q1 von der Druckluft-Düse 41 eingeblasen wird; Zuluft Q2 kann z. B. frei aufgenommen, oder auch über den Zuführkanal 45 gesteuert zugeführt werden, und alles zusammen wird als Abluft Q4 abgeführt.

Somit können Q1, Q2 und Q4 derartig eingestellt werden, dass in dem Metalldampf-Führungskanal 16 eine leichte Sogwirkung auf den Gesamt-Strom Q3 ausgebildet wird.

Sämtliche Ausführungsformen können beliebig kombiniert werden; somit sind Kombinationen der gezeigten Ausführungsformen mit offenbart, insbesondere auch Kombinationen der Ausführungsform der Fig. 1 und 2, der Fig. 3 und 4, der Fig. 5 bis 7 und der Fig. 8.

### Bezugszeichenliste (Teil der Beschreibung)

- 1: Laser-Materialbearbeitungs- Vorrichtung, insbesondere Laserschweiß-Vorrichtung
- 2: Laser, Laserkopf zum Aussenden des Laserstrahls 3
- 3: Laserstrahl
- 3a: Laserstrahl-Bündel
- 4: Laser-Optik zum Bündeln des Laserstrahls
- 5, 6: zu bearbeitende, z. B. zu fügende Werkstücke
- 5a: Werkstück-Oberfläche
- 8: Laser-Materialbearbeitungs-Spur, z. B. Laserschweißnaht
- 10: Schutzgas-Zuführung
- 11: Schutzgas
- 12: Vorschub-Einrichtung
- 14: Metalldampf-Führungseinrichtung
- 15: konische Innenwand
- 16: Metalldampf-Führungskanal
- 16a: konischer Ringspalt
- 17: untere Endfläche, Kontur-parallel zum Werkstück
- 18: Dampfkapillare, Keyhole
- 20: Metalldampf-Strom
- 22: Cross-Jet
- 24: Schutzgas-Kanal, insbesondere Ringnut
- 25: Schutzgas-Zuführung

- 30: Führungsstrom-Zuführeinrichtung
- 31: Führungsstrom-Anschluss
- 32: Führungsstrom, vertikal aufwärts in Metalldampf-Führungskanal, z. B. Druckluft oder Schutzgas
- 33: Führungsstrom-Einlass, z. B. ringförmiger Spalt zur Zuführung des Führungsstroms 32;

- 40: Cross-Jet-Zuführeinrichtung
- 41: Druckluft-Zuführeinlass, z. B. Druckluft-Düse
- 42: Cross-Jet-Kammer
- 43: optisches Fenster, z. B. Schutzglas in der Cross-Jet-Kammer 42
- 44: Öffnung
- 45: Zuführkanal
- 46: Absaugkanal

- A: optische Achse
- B: Brennpunkt
- d: Spalt
- Ib: Spaltlänge, Länge des Strömungswegs durch den Spalt
- Q1: Druckluftstrahl des Cross-Jets 22
- Q2: Zuluft, angesaugt oder gesteuert zugeführt
- Q3: Gesamt-Strom aus Metalldampf-Führungskanal 16
- Q4: Abluft, vorzugsweise aktiv abgesaugt
- q14u: unterer Kanal-Querschnitt des Metalldampf-Führungskanals (16)
- qd: Spaltquerschnitt des Spaltes (d).

## Patentansprüche

1. Laser-Materialbearbeitungs-Vorrichtung (1) zur Laser-Materialbearbeitung von metallischen Werkstücken (5, 6), wobei die Laser-Materialbearbeitungs-Vorrichtung (1) aufweist:
einen Laser (2) zum Aussenden eines Laserstrahls (3) entlang einer optischen Achse (A),
eine Laser-Optik (4) zum Bündeln des Laserstrahls (3) entlang der optischen Achse (A),
**dadurch gekennzeichnet, dass**
eine Metalldampf-Führungseinrichtung (14) mit einem Metalldampf-Führungskanal (16) vorgesehen ist, der den gebündelten Laserstrahl (3a) umgibt und sich entlang der optischen Achse (A) erstreckt,
wobei der Metalldampf-Führungskanal (16) sich entgegen der Laserstrahl-Richtung und/oder von dem Brennpunkt (B) zum Laser (2) hin verbreitert,
wobei die Metalldampf- Führungseinrichtung (14) eine untere Endfläche (17) zur Ausbildung eines Spaltes (d) gegenüber dem Brennpunkt (B) oder einer Werkstück-Oberfläche (5a) aufweist.

2. Laser-Materialbearbeitungs-Vorrichtung (1) nach Anspruch 1,
**dadurch gekennzeichnet, dass** der Metalldampf-Führungskanal (16) sich stetig, insbesondere konisch geradlinig oder konisch mit gewölbter Wandfläche, verbreitert.

3. Laser-Materialbearbeitungs-Vorrichtung (1) nach einem der vorherigen Ansprüche,
**dadurch gekennzeichnet, dass** in der Metalldampf- Führungseinrichtung (14), vorzugsweise an der unteren Endfläche (17) und/oder am unteren Ende des Metalldampf-Führungskanals (16), ein Schutzgas-Kanal (24) zum Zuführen von Schutzgas (11) ausgebildet ist,
wobei der Schutzgas-Kanal eine um die optische Achse (A) herum ausgebildete Ringnut (24), insbesondere eine nach unten zur unteren Endfläche (17) hin offene Ringnut (24), zum konzentrischen Zuführen des Schutzgases (11) zu der Dampfkapillare (18) aufweist.

4. Laser-Materialbearbeitungs-Vorrichtung (1) nach einem der vorherigen Ansprüche,
**dadurch gekennzeichnet, dass** sie eine Cross-Jet-Zuführeinrichtung (40) aufweist, die an einem oberen Ende der Metalldampf-Führungseinrichtung (14) angeordnet ist, wobei der Metalldampf-Führungskanal (16) von einer Cross-Jet-Kammer (42), z. B. über eine Öffnung (43) der Cross-Jet-Kammer (42), aufgenommen wird, zur gerichteten Abführung eines in dem Metalldampf-Führungskanal (16) geführten Gesamt-Stroms (Q3).

5. Laser-Materialbearbeitungs-Vorrichtung (1) nach einem der vorherigen Ansprüche, **dadurch gekennzeichnet, dass** sie eine Laserschweiß-Vorrichtung zum Laserschweißen von metallischen Werkstücken (5, 6) in einer Laserschweißnaht (8) ist.

6. Laser-Materialbearbeitungs-Vorrichtung (1) nach einem der vorherigen Ansprüche, **dadurch gekennzeichnet, dass** sie eine Führungsstrom-Zuführeinrichtung (30) mit einem Führungsstrom-Einlass (33) zum Zuführen eines Führungsstroms (32), z. B. Druckluft, an einer Innenfläche (15) und/oder einen unteren Endbereich (16a) des Metalldampf-Führungskanals (16) aufweist, zur Ausbildung des Führungsstromes (32) in dem Metalldampf-Führungskanal (16) entgegen der Laserstrahl-Richtung.

7. Laser-Materialbearbeitungs-Vorrichtung (1) nach Anspruch 6,
**dadurch gekennzeichnet, dass** der Führungsstrom-Einlass (33) oberhalb der unteren Endfläche (17) der Metalldampf- Führungseinrichtung (14) und/oder oberhalb des das Schutzgas (11) aufnehmenden Schutzgas-Kanal (24) und/oder oberhalb einer Schutzgas-Zuführung (25) und/oder mit Ausrichtung nach oben vorgesehen ist, zur Vermeidung einer Strömung des Führungsstromes (32) zu dem Werkstück (5).

8. Anordnung (7) aus einer Laser-Materialbearbeitungs-Vorrichtung (1) nach einem der vorherigen Ansprüche und dem von der Laser-Materialbearbeitungs-Vorrichtung (1) bearbeiteten Werkstück (5),
**dadurch gekennzeichnet, dass**
die untere Endfläche (17) der Metalldampf- Führungseinrichtung (14) konturparallel zu der Werkstück-Oberfläche (5a) verläuft und zwischen der unteren Endfläche (17) und der Werkstück-Oberfläche (5a) ein gleichmäßiger Spalt (d) ausgebildet ist.

9. Anordnung nach Anspruch 8,
**dadurch gekennzeichnet, dass** die untere Endfläche (17) nicht-eben oder gewinkelt konturparallel zum Werkstück (5) ausgebildet ist, zur Bearbeitung oder Ausbildung eines nicht-ebenen, z. B. winkligen Werkstücks.

10. Anordnung nach Anspruch 8 oder 9,
**dadurch gekennzeichnet, dass**
eine Schutzgas-Zuführeinrichtung (10) das Schutzgas (11) von außen zuführt, vorzugsweise konzentrisch nach innen in den Schutzgas-Kanal (24) oder zur optischen Achse (A) hin, und
der Metalldampf-Führungskanal (16) nach dem Prinzip einer Venturi-Düse im Bereich des Spaltes (d) und der durch den Laser in dem Werkstück (5) erzeugten Dampfkapillare eine Sogwirkung ausbildet zum Mitreißen des Schutzgases (11) durch den Metalldampf-Strom ohne zusätzliche aktive Absaug-Einrichtungen.

11. Anordnung nach einem der Ansprüche 8 bis 10,
**dadurch gekennzeichnet, dass** ein unterer Kanal-Querschnitt (q14u) des Metalldampf-Führungskanals (14) größer als ein Spaltquerschnitt (qd) des Spaltes (d) ist.

12. Anordnung nach einem der Ansprüche 8 bis 11,
**dadurch gekennzeichnet, dass** die Spaltgeometrie eine Spaltlänge (Ib) aufweist, die größer ist als die Spaltbreite (d).

13. Verfahren zur Laser-Materialbearbeitung, insbesondere Laser-Schweißung eines metallischen Werkstücks (5), bei dem
ein Laserstrahl (3) von einem Laser (2) ausgestrahlt wird,
der Laserstrahl (3) durch eine Laser-Optik (4) entlang einer optischen Achse (A) auf einen Brennpunkt (B) gebündelt wird,
mindestens ein zu bearbeitendes metallisches Werkstück, z. B. ein Fügestoß zweier Metallbleche (5, 6), relativ zu dem Brennpunkt (B) entlang einer Vorschub-Richtung geführt wird unter Ausbildung einer Laser-Materialbearbeitungs-Spur (8) als aufgeschmolzenes Metall, wobei der gebündelte Laserstrahl (3a) in eine Dampfkapillare (18) in die Metallschmelze eindringt und ein Metalldampf-Strom (20) aus der Dampfkapillare (18) austritt,
wobei ein Schutzgas (11) zu der Dampfkapillare (18) geführt wird, **dadurch gekennzeichnet, dass**
der aus der Dampfkapillare (18) austretende Metalldampf-Strom (20) entlang der optischen Achse (A) in dem Metalldampf-Führungskanal (16) mit sich stetig verbreiterndem Querschnitt entgegen der Laserstrahl-Richtung weg geführt wird unter Aufweitung seines Querschnittes.

14. Verfahren nach Anspruch 13, **dadurch gekennzeichnet, dass** oberhalb des Metalldampf-Führungskanals (16) der Metalldampf-Strom (20) durch einen senkrecht zur optischen Achse (A) verlaufenden Druckluft-Strom (22) abgeführt wird.

15. Verfahren nach einem der Ansprüche 13 bis 14,
**dadurch gekennzeichnet, dass** das Schutzgas (11) von dem Metalldampf-Strom (20) entlang des Metalldampf-Führungskanals (16) mitgerissen wird unter Ausbildung einer Sogwirkung auf das Schutzgas (11),
wobei eine Schutzgas-Zuführeinrichtung (10) das Schutzgas (11) von außen in den Spalt (d) zuführt, vorzugsweise konzentrisch nach innen oder zur optischen Achse (A) hin, und
der Metalldampf-Führungskanal (16) nach dem Prinzip einer Venturi-Düse im Bereich des Spaltes (d) und der durch den Laser in dem Werkstück (5) erzeugten Dampfkapillare eine Sogwirkung ausbildet, wodurch das Schutzgas (11) ohne zusätzliche aktive Absaug-Einrichtungen bereits von dem Metalldampf-Strom mitgerissen wird.

16. Verfahren nach einem der Ansprüche 13 bis 15,
**dadurch gekennzeichnet, dass** das Schutzgas (11) über eine Schutzgas-Zuführung (25) direkt dem Metalldampf-Führungskanal (16) zugeführt wird, unter Ausbildung eines Schutzgas-Stroms in dem Metalldampf-Führungskanal (16) entgegen der Laserstrahl-Richtung.

17. Verfahren nach einem der Ansprüche 13 bis 16,
**dadurch gekennzeichnet, dass** der Metalldampf-Führungskanal (16) in einer Metalldampf- Führungseinrichtung (14) ausgebildet ist, deren untere Endfläche (17) konturparallel zu einer Werkstück-Oberfläche (5a) des Werkstücks (5, 6) gehalten wird, vorzugsweise unter Ausbildung eines gleichmäßigen Spaltes (d) zwischen der untere Endfläche (17) und der Werkstück-Oberfläche (5a).

18. Verfahren nach Anspruch 17, **dadurch gekennzeichnet, dass**
ein Werkstück (5) mit nicht-ebener, z. B. abgewinkelter Werkstück-Oberfläche (5a) bearbeitet oder ausgebildet wird, wobei die nicht-ebene, z. B. abgewinkelte untere Endfläche (17) konturparallel zu der Werkstück-Oberfläche geführt wird.

19. Verfahren nach Anspruch 17 oder 18, **dadurch gekennzeichnet, dass** ein unterer Kanal-Querschnitt (q14u) des Metalldampf-Führungskanals (14) größer als ein Spaltquerschnitt (qd) des Spaltes (d) gehalten wird.

20. Verfahren nach einem der Ansprüche 13 bis 19,
**dadurch gekennzeichnet, dass** ein Führungsstrom (32), insbesondere ein vom Schutzgas verschiedenes Gas wie z. B. Druckluft, zu einer Innenfläche (15) und/oder an einen unteren Endbereich (16a) des Metalldampf-Führungskanals (16) und/oder von einer unteren Endfläche (17) beabstandet und/oder von einer Schutzgas-Zuführung beabstandet und/oder mit Ausrichtung entgegen der Laserstrahl-Richtung zugeführt wird, zur Ausbildung des Führungsstromes (32) entgegen der Laserstrahl-Richtung und weg von dem Werkstück (5).
